(19) Europäisches Patentamt
European Patent Office
Office européen des brevets

(11) **EP 4 549 532 A1**

(12) **EUROPEAN PATENT APPLICATION**

(43) Date of publication:
**07.05.2025 Bulletin 2025/19**

(21) Application number: **24183750.9**

(22) Date of filing: **21.06.2024**

(51) International Patent Classification (IPC):
***C09K 8/035*** $^{(2006.01)}$ ***C09K 8/54*** $^{(2006.01)}$

(52) Cooperative Patent Classification (CPC):
**C09K 8/035; C09K 8/54;** C09K 8/74; C09K 2208/32

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.10.2023 CN 202311418961**

(71) Applicants:
- **China University of Petroleum (East China)**
  **Qingdao, Shandong 266580 (CN)**
- **University of Maribor**
  **2000 Maribor (SI)**

(72) Inventors:
- **YANG, Zhen**
  **Qingdao 266580 (CN)**
- **WANG, Yefei**
  **Qingdao 266580 (CN)**
- **FINGAR, Matja**
  **2000 Maribor (SI)**
- **WANG, Jing**
  **Qingdao 266580 (CN)**
- **DIND, Mingchen**
  **Qingdao 266580 (CN)**
- **YANG, Jiang**
  **Qingdao 266580 (CN)**
- **FAN, Haiming**
  **Qingdao 266580 (CN)**
- **SUN, Shuangqing**
  **Qingdao 266580 (CN)**
- **HU, Songqing**
  **Qingdao 266580 (CN)**

(74) Representative: **JD&P Patent Attorneys**
**Joanna Dargiewicz & Partners**
**ul. Mysliborska 93A/50**
**03-185 Warszawa (PL)**

# (54) A COMPOSITE ACIDIZING CORROSION INHIBITOR COMPOUND BASED ON INDOLIZINE DERIVATIVE AND A PREPARATION METHOD THEREOF

(57) The invention discloses a composite acidizing corrosion inhibitor compound based on an indolizine derivative and its preparation method. Raw materials and mass fraction of the composite acidizing corrosion inhibitor compound are as following: indolizine derivative concentrated mother liquor 25%-35%, compound synergistic additives 30%-40%, and surfactant 8%-12%, and cosolvent 20%-25%, and water for balance. On the basis of discovering the unique synergistic effect between the indolizine derivative and paraformaldehyde, the indolizine derivative is used as the main agent to compound with synergist paraformaldehyde; the strategy of preparing indolizine derivative concentrated mother liquor is remain part of the synthesizing solvent, which can enhance its solubility and dispersivity. The required dosage of the composite acidizing corrosion inhibitor compound obtained in this invention is lower than that of industry standard, and its corrosion inhibition performance is better than that of the industry standard under the same evaluation temperature.

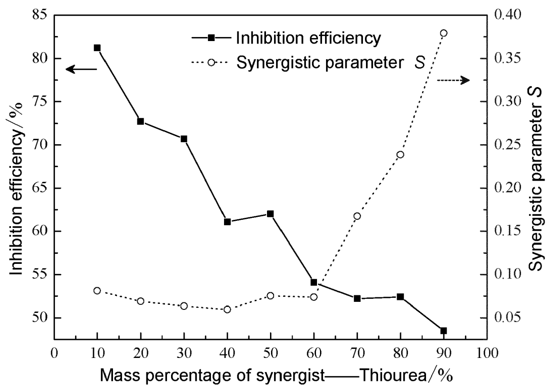


FIG. 1

EP 4 549 532 A1

Processed by Luminess, 75001 PARIS (FR)

## Description

### TECHNICAL FIELD

The invention relates to a technical field of corrosion inhibitor, in particular to a composite acidizing corrosion inhibitor compound based on an indolizine derivative and a preparation method thereof.

### BACKGROUND

Metal corrosion is existed everywhere, especially in the petroleum and petrochemical industry where metal equipment and pipe fittings are widely used, it is particularly necessary to prevent metal corrosion. Acidification construction refers to the injection of a large number of high-concentration acid into the formation to restore or increase the permeability of the formation, so as to realize the production increase of oil and gas wells and water well injection. In acidizing construction, especially in high temperature deep well acidizing accomplished by concentrated hydrochloric acid or a large amount of mud acid (hydrochloric acid and hydrofluoric acid in a certain proportion of the mixture), the primary task is to solve the acidizing corrosion of oil well casing equipment. In addition, the hydrogen produced after the reaction of metal and acid solution will cause hydrogen embrittlement corrosion of metal equipment, and will also bring out a large amount of acidic gas to form acid fog, so it is necessary to take targeted corrosion inhibition measurements for metal corrosion in the acidizing process. Acidizing corrosion inhibitor is widely used to prevent the corrosion of hydrochloric acid or mud acid solution on metal equipment or underground pipe string during the acidizing process of oil wells, so as to ensure the implementation of the acidizing fracturing process of oil wells and the realization of technical measures to increase and stabilize the oil/gas production.

The most economical and convenient way in oil and gas acidification is to add corrosion inhibitor to the acidizing working fluid. The existing practice shows that quaternary ammonium salts formed by nitrogenous aromatic heterocycles (such as quinoline or pyridine) and halogens are effective corrosion inhibitors for acidification. However, with the development of technology in this field, the performance of classic corrosion inhibitor(s) is no longer suitable for the new application conditions such as high temperature and environmental friendliness. Chinese patent with Publication Number of CN107502333A and CN107418549A introduced the composite acidizing corrosion inhibitor based on quinoline quaternary ammonium salt, although it can be used for acidizing conditions at 160 °C, but high toxic chemicals such as propargyl alcohol must be added as a synergist. The preparation process of the corrosion inhibitor described in patent CN103554027A is very complicated, and the temperature required for the synthesis process is as high as 200 °C. The corrosion inhibitor compound provided by Chinese patent with Publication Number of CN1042333310A which based on quaternary ammonium salts needs to add surfactants, cosolvents, organic phosphinates, dispersants, etc., and the component of the corrosion inhibitor compound is complicated and the cost is high. The preparation process of corrosion inhibitor reported in Chinese patent with Publication Number of CN110105288A requires the use of expensive metallic catalysts such as $InCl_3$ and $NbCl_5$, and the production conditions are relatively harsh.

Therefore, it is more and more important to research and develop acidizing corrosion inhibitors which not only could be utilized at 90°C or higher temperatures, but also with low formation damage and high temperature resistance characteristic. According to the feedback from oil field application, currently the commonly used acidizing corrosion inhibitors for medium or high temperature in China have shortcomings at elevated temperatures, e.g. easy coking, delamination, and sometimes the solubility dispersion is not stable enough. Therefore, it is very important to investigate and to explore acidizing corrosion inhibitor for medium or high temperature with stable performance. The exploration of oil well acidizing corrosion inhibitor with low price, high temperature resistance, better effectiveness advantages is one of the urgent need of oil and gas field acidification stimulation in China, which is also to of great significance to improve the acidification result, to reduce the corrosion of equipment and pipelines, and to bring more economic benefits.

The main agent of corrosion inhibitors which used during the past decades(such as quaternary ammonium salt-based corrosion inhibitor main agent) usually behaves relatively low corrosion inhibition efficiency, in this case, the required amount of the corrosion inhibitor product is relatively high, for example, the mass fraction of acidizing corrosion inhibitor required in 120°C, 20 wt.% HCl usually varied between 3-4 wt.%, and the highly toxic and expensive synergist(s) have to be added. The limitation of the existing acidizing corrosion inhibitor standard also makes the quality of corrosion inhibitor often be strictly controlled by the economic cost and environmental protection requirements, so that its application scope is gradually decreased. If any corrosion inhibitor with more efficient performance and novel structure could be used, it can show better inhibition performance under a lower concentration, and there is no need for the presence of highly toxic synergist, which is also conducive to further reducing the amount of acidizing corrosion inhibitor and minimizing its total cost.

Studies have shown that under acidizing conditions, the intermolecular dimer of the traditional quinoline quaternary ammonium inhibitor (such as benzyl quinoline quaternary ammonium chloride) can show much better corrosion inhibition performance than these quaternary ammonium salt inhibitors(e.g. Corros. Sci., 2015, 99,

281-294). The novel quaternary ammonium dimer with high-effective corrosion inhibition is classified as the derivative of indolizine, because the molecule of this dimer contains the basic unit of 'indolizine'.

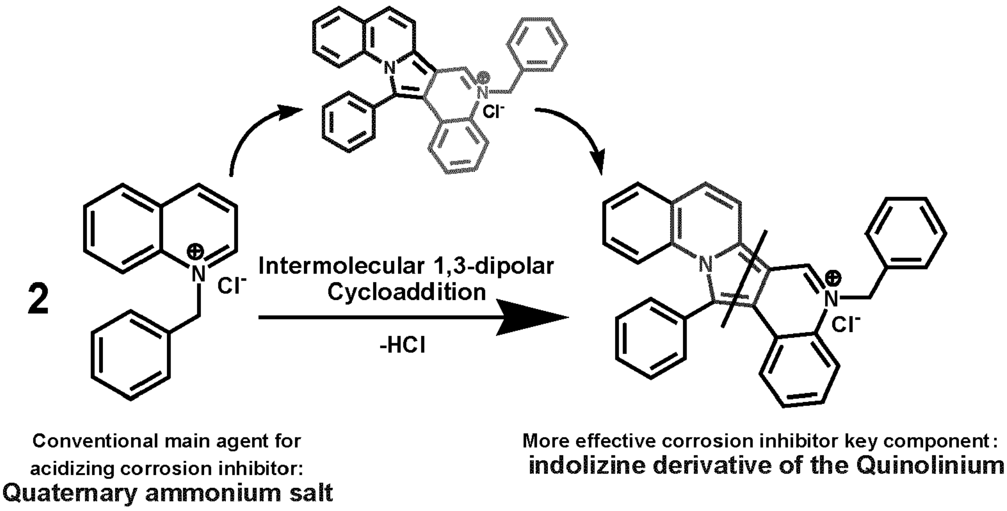


In the Chinese patent with Publication Number of CN114105984B which previously applied by the inventor, the substrate quinoline and halide have been claimed in the preparation process of traditional quaternary ammonium salt corrosion inhibitors; but with the assistance of easily accessible oxidizing agent sodium nitrite, and the indolizine derivative with more efficient corrosion inhibition for acidizing can be obtained from the same raw material at lower cost and higher yield. However, the corresponding publications seldom involved the investigation of the target molecule's anti-corrosion performance as main agent and there is not any investigation on the potential component for compound corrosion inhibitor towards the indolizine derivative. Therefore, based on the new concept main agent indolizine derivative, through the examination and selection of compound formula, an excellent and efficient corrosion inhibitor for acidification was invented, which has strong innovation and application potential and broad industrial prospect.

## SUMMARY

In view of this, the present invention aims to provide a composite acidizing corrosion inhibitor compound based on an indolizine derivative and a preparation method thereof. The composite acidizing corrosion inhibitor compound has better compatibility, solubility and dispersion in acid solution, the amount of corrosion inhibitor is much lower but with a better corrosion inhibition performance.

In order to achieve the above purposes, the present invention provides the following technical proposal: the present invention provides a composite acidizing corrosion inhibitor compound based on the indolizine derivative, raw materials and mass fractions of the composite acidizing corrosion inhibitor compound are as following:

indolizine derivative concentrated mother liquor 25%-35%;
compound synergistic additives 30%-40%; and
surfactant 8%-12%; and
cosolvent 20%-25%; and
water for balance;
wherein the indolizine derivative includes indolizine derivative VI and indolizine derivative VII; and general formulas for chemical structure of the indolizine derivative VI and the indolizine derivative VII are shown below;

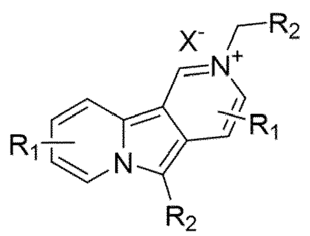
VI

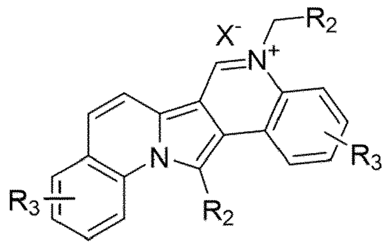
VII

wherein $R_1$ and $R_3$ are one or two of hydrogen atom, saturated alkyl chain with the number of carbon atoms within $C_1$-$C_{20}$, unsaturated alkyl chain with the number of carbon atoms within $C_1$-$C_{20}$, saturated cyclic alkyl group with the number of carbon atoms within $C_1$-$C_{20}$, unsaturated cyclic alkyl group with the number of carbon atoms within $C_1$-$C_{20}$, aldehyde group, halogen, nitro group, cyano group, hydroxyl group, methoxy group or 4-N,N-dimethylamino group, $R_1$ is the same or different from $R_3$; $R_2$ is selected from the saturated chain alkyl, phenyl, benzoyl, naphthalene, halogenated phenyl, methyl formate, ethyl formate, methoxyphenyl, nitrophenyl, methyl phenyl within $C_1$-$C_{20}$; X is selected from halogens;

the compound synergistic additives includes organic synergist and inorganic synergist; paraformaldehyde is selected as the organic synergist; one or more kind(s) of inorganic chemicals such as potassium iodide, cuprous iodide and antimony trioxide is (are) chosen as inorganic synergist(s).

In aonther embodmient, the specific preparation steps of the indolizine derivative concentrated mother liquor are as follows:

(1) heating pyridine derivative I or quinoline derivative II with halogenated compounds III containing α-methyl in solvent to generate intermediate mixture containing quaternary ammonium salt IV or quaternary ammonium salt V; and general formulas for chemical structure of pyridine derivative I, quinoline derivative II, and halogenated compounds III, and quaternary ammonium salt intermediate IV and quaternary ammonium salt intermediate V are shown below;

(2) adding an oxidant, nitrite, into the intermediate mixture obtained in step (1), heating the intermediate mixture to obtain a mixture containing indolizine derivative VI or indolizine derivative VI through a dimerization reaction;

(3) filtering the mixture obtained by in step (2) to obtain filtrate, and distilling to remove 40 % to 60 % solvent from total mass of the filtrate, to obtain the indolizine derivative concentrated mother liquor;

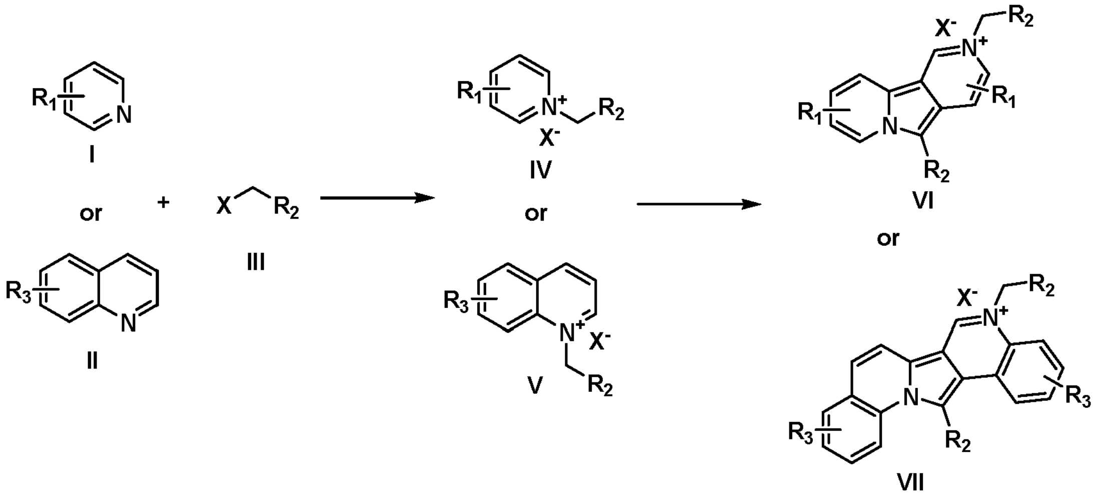


In aonther embodmient, in step (1), a proportion in mass among the pyridine derivative I or quinoline derivative II, the halogenated compound III containing α-methyl and the solvent is (0.9-1.0):(1.1-1.2):(2.5-3.0).

In aonther embodmient, the solvent in the preparation process of the indolizine derivative concentrated mother liquor is dimethyl sulfoxide, N,N-dimethylformamide, acetonitrile, 1,2-dichloroethane, ethanol, n-butanol, 2-butanol, methanol, n-propanol or isopropanol.

In aonther embodmient, a chemical structure of the indolizine derivative VII is:

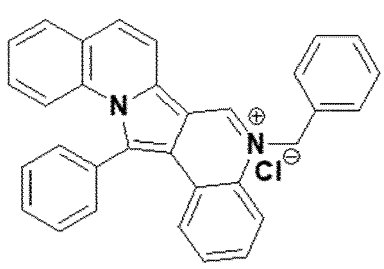

In aonther embodmient, a proportion in mass between the organic synergist and inorganic synergists of

compound synergistic additives is (1.9-2.2):(0.8-1.1).

In aonther embodmient, one or more kind(s) of Triton X-100, Peregal 0-10, Span-60, Tween-60 and lignosulfonate is (are) chosen as surfactant(s).

In aonther embodmient, the cosolvent includes organic acid and fatty alcohol.

In aonther embodmient, one or more kind(s) of formic acid, acetic acid and oxalic acid is (are) chosen as organic acid(s); and one or more kind(s) of methanol, ethanol, n-propyl alcohol, isopropyl alcohol and glycol is (are) chosen as fatty alcohol(s).

The present invention also provides a preparation method of a composite acidizing corrosion inhibitor compound based on the indolizine derivative: synthesizing the indolizine derivative VI or indolizine derivative VII, and steaming away part of solvent to obtain indolizine derivative concentrated mother liquor; mixing the organic synergist and inorganic synergist evenly in water to obtain compound synergistic additives; mixing organic acid and fatty alcohol evenly to get cosolvent; mixing the indolizine derivative concentrated mother liquor, compound synergistic additives, surfactants, cosolvent and water evenly in a container, heating the container by water bath at 50°C to 60°C, and at the meantime stirring the mixture under ultrasonic shock until the mixture got fully dissolved, to obtain the composite acidizing corrosion inhibitor compound.

The beneficial effects of the present invention are as follows:

on the basis of discovering the unique synergistic effect between indolizine derivative and paraformaldehyde, the indolizine derivative is used as the main agent to the synergist paraformaldehyde, and the strategy of retaining part of the solvent for main agent to compound with synergist paraformaldehyde; the strategy of preparing indolizine derivative concentrated mother liquor is remain part of the synthesizing solvent, which can enhance its solubility and dispersivity. The required dosage of the composite acidizing corrosion inhibitor compound obtained in this invention is lower than that of industry standard, and its corrosion inhibition performance is better than that of the industry standard under the same evaluation temperature.

## BRIEF DESCRIPTION OF THE DRAWINGS

In order to explain the purpose, technical solutions and beneficial effects of the present invention more clearly, the following figures are attached to illustrate the present invention:

FIG. 1 is a curve chart of a relationship of synergistic parameters between indolizine derivative and thiourea;
FIG. 2 is a curve chart of a relationship of synergistic parameters between indolizine derivative and cinnamaldehyde;
FIG. 3 is a curve chart of a relationship of synergistic parameter between indolizine derivative and butynediol;
FIG. 4 is a curve chart of a relationship of synergistic parameter between indolizine derivative and paraformaldehyde;
FIG. 5 is a schematic diagram of corrosion inhibiting adsorption mode of the indolizine derivative on a metal surface;
FIG. 6 is results of contact Angle experiment after gravimetric test by corrosion inhibitor according to some embodiments of the present invention.

## DETAILED DESCRIPTION OF THE EMBODIMENTS

The present invention is further explained in combination with the attached drawings and specific embodiments, so that the technicians in the field can understand the invention better and the technology could be implemented. But the embodiments given shall not be regarded as limitations of the present invention. If the specific technology or conditions are not indicated in the embodiment, it shall be carried out according to the specification in accordance with the technology or conditions described in the literature(s) of the field. All reagents or instruments for which the manufacturer is not indicated are conventional products that can be purchased.

I. Synergies between indolizine derivative and paraformaldehyde

In studies of compound synergism, the interaction between the main agent and the compound agent is generally judged by comparing the synergistic parameter S value between the two agents, so as to confirm whether there is a corrosion inhibition synergistic effect between the main agent and each synergists. The value of the synergistic parameter S can be calculated by equation 1-1.

$$S = \frac{1-\eta_A-\eta_B+\eta_A\eta_B}{1-\eta_{AB}} \qquad (1\text{-}1)$$

where, $\eta_A$-inhibition efficiency when main agent A is used alone;
$\eta_B$-inhibition efficiency when synergist B is used alone; and
$\eta_{AB}$-inhibition efficiency when A and B is used in combination.

$$Inhibition\ efficiency = \frac{corrosion\ rate\ in\ absence\ of\ inhibitor - corrosion\ rate\ in\ presence\ of\ inhibitor}{corrosion\ rate\ in\ absence\ of\ inhibitor}.$$

Generally, when S = 1, indicating that there is no obvious synergistic effect between main agent A and synergist B; when S >1, indicating that positive synergistic effect exists between A and B, and the combination of the two components can improve the effect of the main agent at a certain proportion; when S <1, indicating that there is no synergistic effect between the two components, that is, an antagonistic effect is existed.

The present invention first discovers and confirms the unique synergistic effect between indolizine derivative and paraformaldehyde. The commonly used synergistic agents in acidizing corrosion inhibitor products mainly include thiourea, cinnamaldehyde and alkynol, etc. Taking the following chemical structures of indolizine derivatives as an example, the indolizine derivative was mixed with thiourea, cinnamaldehyde, butadiol and paraformaldehyde (fixing the dosage of indolizine derivative, and varing the dosage of synergistic agent), the corrosion inhibition efficiency and synergistic parameters under each ratio were calculated.

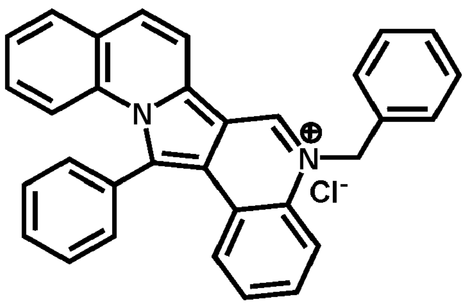

Indolizine derivative

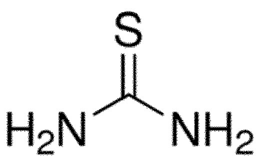

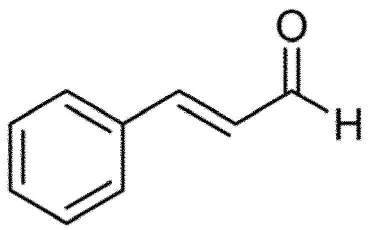

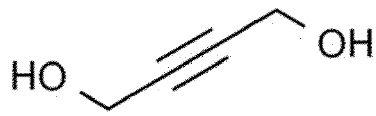

Thiourea Cinnamaldehyde Butynediol

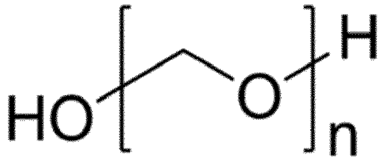

Paraformaldehyde
(Number of polymeric links n= about 10-100)

The values of synergistic parameters are shown in FIG. 1-FIG. 4. It can be seen that when these conventional synergistic agents: thiourea, cinnamaldehyde and butynediol are compounded with the indolizine derivative, the values of

synergistic parameter S is generally below 1, indicating that there is no obvious synergistic effect between the conventional synergistic agents and the main agen tindolizine derivative. FIG. 4 shows that there is positive synergistic effect between the paraformaldehydeand the indolizine derivatives. In a relatively wide dosage range, S > 1, the synergistic effect between the two components is obvious, showing particular advantages of the paraformaldehyde.

Based on the above analysis, it can be concluded that, due to the special chemical structure of the indolizine derivative, its molecule contains a conjugated plane composed of 21 $sp^2$ hybrid rigid C atoms and N atoms.

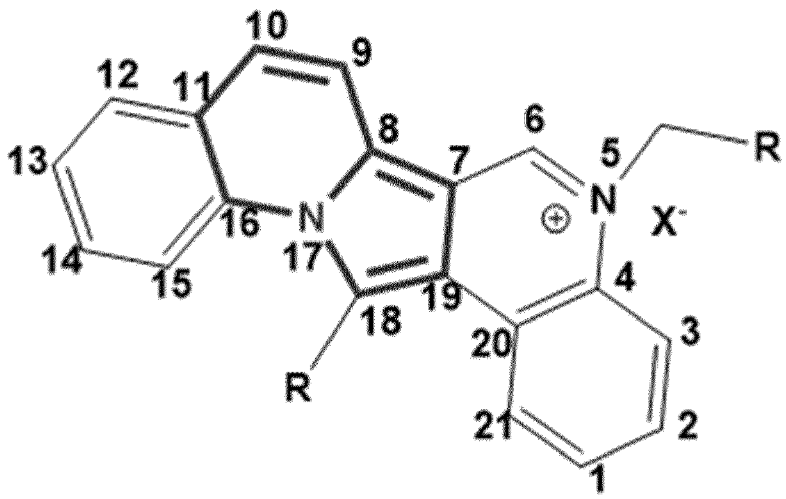

Therefore, considering the structural characteristics of the indolizine derivative molecule, in the chemisorption stage of corrosion inhibition which has a corrosion inhibition effect on the metal surface, a large number of plane conjugated electrons may make the molecule of the main agent prefer to get adsorbed onto the metal surface to form coordination bonds by plane adhesion, and the indolizine derivative plays a unique and efficient inhibition efficiency (as shown in FIG. 5). Molecular dynamics simulation experiments confirms that after the indolizine derivative reaches adsorption equilibrium at the metal surface, a whole of the conjugated plane in the molecule is almost parallel to the metal surface. Due to the large planar structure of the indolizine derivative ($C_{32}H_{23}N_2Cl$), the adsorbed indolizine derivative molecules are more compactly arranged and a gap scale between molecules becomes smaller. Therefore, the synergist agent with relatively smaller molecular mass are more likely to be inserted into the adsorbed indolizine derivative molecules, and further cover the gap between two main agent inhibitor molecules, and may further fill gaps, and improving the overall effectiveness of the main agent corrosion inhibitor covering the metal surface.

Generally the previously reported inhibitors do not have outstanding feature of large intramolecular conjugated plane structure (Table 1). Therefore, although thiourea, cinnamaldehyde, butynediol and other conventional synergist agent with appropriate molecular size can exhibit good synergistic effect with the representative corrosion inhibitors listed in Table 1, but they could not bring a significant synergistic effect with the indolizine derivative of the present invention.

Table 1 the chemical structures of the representative corrosion inhibitor main agent for acidification.

| Chemical structure of corrosion inhibitorm ain agent | References |
|---|---|
| 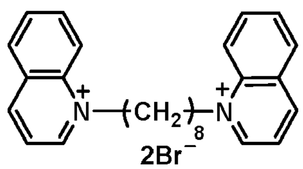 | Ind. Eng. Chem. Res., 2014, 53, 14199-14207. |
| 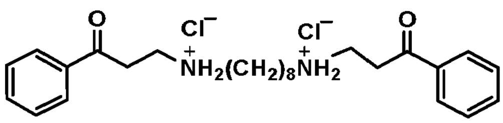 | J. Mol. Liq., 2021,347: 117957. |

(continued)

| Chemical structure of corrosion inhibitorm ain agent | References |
|---|---|
| 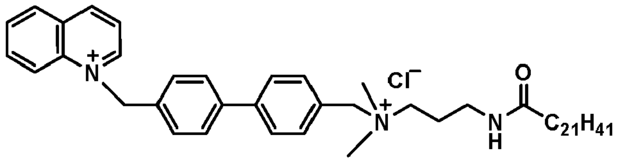 | Chem. Eng. J., 2020, 402: 126219. |
| 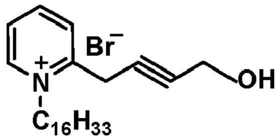 | Corros. Sci., 2015, 90: 118-132. |
| 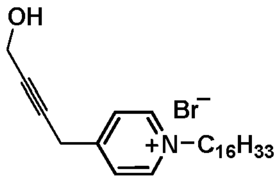 | Corros. Sci., 2012, 65: 13-25. |
| 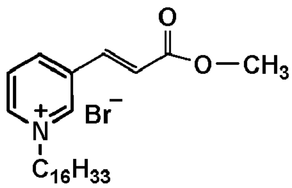 | Corros. Sci., 2015, 94: 224-236. |

The paraformaldehyde used in the present invention is a linear fragment formed by low degree polymerization between several formaldehyde molecules, which is a stable solid at room temperature. Each molecular chain in paraformaldehyde contains a carbonyl functional group with corrosion inhibition and adsorption effect, which can more effectively get adsorbed and coordinated with the metal surface. After being dissolved in acidic aqueous solution, paraformaldehyde can be partially converted into small molecular formaldehyde, and can also be free to protect the metal interface that is not covered by the adsorption of the main corrosion inhibitor and block the direct contact of the acid from raw steel surface. This may be the reason for the unique and remarkable synergistic effect between indolizine derivative and paraformaldehyde.

II. Indolizine derivative concentrated mother liquor

In previous studies and reports, vacuum distillation is an essential treatment in the preparation process of any corrosion inhibitor main agent to remove the solvent as far as possible, and it may continue the rest steps to obtain the final corrosion inhibitor product, e.g. by adding selected synergists, cosolvents etc.

For the indolizine derivative of the present invention, the inventor found that during the solvent removal process of the filtrate, excessive evaporation for a long time heating is easy to cause oxidation deterioration of the indolizine derivative, or excessive condensation and other problems, which will decrease the effective content of the indolizine derivative among the indolizine derivative crude product mixture (see Table 2), and may adversely affect the final performance of composite corrosion inhibitor product.

Table 2 Influences of evaporation time of crude filtrate of indolizine derivative on effective content at 85°C to 90 °C

| Time of the evaporation treatment/h | Effective content of indolizine derivative main agent in evaporated mother liquor/% | Mass percentage of solvent that evaporated in this step/% |
|---|---|---|
| 1 | 58.0 | 21.3 |
| 2 | 58.0 | 26.8 |
| 3 | 58.0 | 33.1 |
| 4 | 56.0 | 39.2 |

(continued)

| Time of the evaporation treatment/h | Effective content of indolizine derivative main agent in evaporated mother liquor/% | Mass percentage of solvent that evaporated in this step/% |
|---|---|---|
| 5 | 55.0 | 45.0 |
| 6 | 52.0 | 49.7 |
| 8 | 51.0 | 53.4 |
| 10 | 49.0 | 55.5 |
| 12 | 46.0 | 56.2 |
| 18 | 45.0 | 56.8 |
| 24 | 44.0 | 56.9 |
| Note: after part of the mother liquor is evaporated, the effective content of the indolizine derivative main agent is determined by the following steps: refilling the same solvent back to an original volume, the effective content of indolizine derivative in the mixture could be determined by the nuclear magnetic resonance internal standard method which disclosed in Chinese patent CN 202211470666.4. | | |

Therefore, the present invention adopts the strategy of retaining part of synthetic solvent of main inhibitor agent, after the indolizine derivative VI or the indolizine derivative VII was synthesized, only part of the solvent is evaporated away (it is more appropriate to remove 40 % to 60 % solvent from total mass of the filtrate) to obtain indolizine derivative concentrated mother liquor, to obtain the concentrated mother liquor, and the concentrated mother liquor was utilized directly to mix with the other components, the disadvantages such as oxidation deterioration or excessive condensation of indolizine derivative caused by evaporating solvent are avoided, and the solvent retained in the concentrated mother liquor is benefit for the enhancement of the inhibitor complex product's solubility and dispersity.

The specific preparation steps of the indolizine derivative concentrated mother liquor are as follows:

(1) heating pyridine derivative I or quinoline derivative II with halogenated compounds III containing α-methyl in solvent to generate intermediate mixture containing quaternary ammonium salt IV or quaternary ammonium salt V;
(2) adding an oxidant, nitrite, into the intermediate mixture obtained in step (1), heating the intermediate mixture to obtain a mixture containing indolizine derivative VI or indolizine derivative VI through a dimerization reaction;
(3) filtering the mixture obtained by in step (2) to obtain filtrate, and distilling to remove 40 % to 60 % solvent from total mass of the filtrate, to obtain the indolizine derivative concentrated mother liquor;

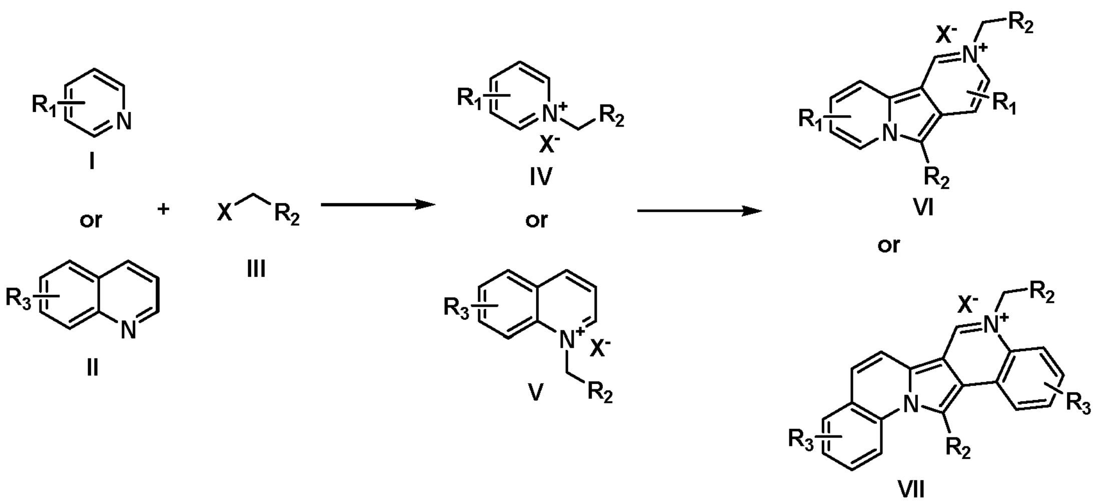

3. Specific Embodiments

Embodiment 1

(1) Preparation of indolizine derivative concentrated mother liquor (mass percentage, same below):

industrial quinoline: 20%;
industrial benzyl chloride: 25%; and
ethanol: 55%;
the industrial quinoline, the ethanol and the industrial benzyl chloride are added in turn to react in a container, after the reaction lasts for 6h under a condition of continuous stirring and constant temperature of 110 °C, to obtain the quaternary ammonium salt intermediate. After cooling, sodium nitrite solid with the same mass as the raw material of quinoline was added to the intermediate mixture, and the temperature is risen to 140 °C in the same container with stirring for 3h before the reaction ended. After the mixture is slightly cooled, the solid insoluble substance is filtered out with 100 to 200 mesh filter cloth and the filtrate is collected, heating until reaches the boiling point, 50% solvent from total mass of the filtrate was removed to obtain the indolizine derivative concentrated mother liquor.

(2) Preparation of compound synergistic additives:

organic synergist: paraformaldehyde 60%;
inorganic synergist: potassium iodide 30%; and
water for balance.

Mixing the organic synergist and inorganic synergist according to the proportion, and stirring evenly, and the compound synergistic additives can be obtained.
(3) Preparation of cosolvent:

formic acid: 50%;
isopropyl alcohol: 50%;
the cosolvent is obtained after the organic acid is evenly mixed with alcohol solvent.

(4) The formulation of composite acidizing corrosion inhibitor compound:
According to the mass fractions, the composite acidizing corrosion inhibitor compound includes the following components:

indolizine derivative concentrated mother liquor: 25%;
compound synergistic additives: 35%; and
surfactant Triton X-100: 10%; and
cosolvent: 25%; and
water for balance.

Mixing the components evenly in the container, keeping the container in water bath heating at 50-60 °C, and in the meantime performing an ultrasonic shock and stirring for 0.5h until the mixture got fully dissolved, to obtain the composite acidizing corrosion inhibitor compound.

Embodiment 2

(1) Preparation of indolizine derivative concentrated mother liquor (mass percentage, same below):

industrial quinoline: 20%;
industrial benzyl chloride: 25%; and
ethanol: 55%;
the industrial quinoline, the ethanol and the industrial benzyl chloride are added in turn to react in a container, after the reaction lasts for 6h under a condition of continuous stirring and constant temperature of 110 °C, to obtain the quaternary ammonium salt intermediate. After cooling, sodium nitrite solid with the same mass as the raw material of quinoline was added to the intermediate mixture, and the temperature is risen to 140 °C in the same container with stirring for 3h before the reaction ended. After the mixture is slightly cooled, the solid insoluble substance is filtered out with 100 to 200 mesh filter cloth and the filtrate is collected, heating until reaches the boiling point, 50% solvent from total mass of the filtrate was removed to obtain the indolizine derivative

concentrated mother liquor.

(2) Preparation of compound synergistic additives:

organic synergist: paraformaldehyde 48%;
inorganic synergist: cuprous iodide 25%; and
water for balance.
Mixing the organic synergist and inorganic synergist according to the proportion, and stirring evenly, and the compound synergistic additives can be obtained.

(3) Preparation of cosolvent:

acetic acid: 50%;
isopropyl alcohol: 50%;
the cosolvent is obtained after the organic acid is evenly mixed with alcohol solvent.

(4) The formulation of composite acidizing corrosion inhibitor compound:
According to the mass fractions, the composite acidizing corrosion inhibitor compound includes the following components:

indolizine derivative concentrated mother liquor: 30%;
compound synergistic additives: 30%; and
surfactants peregal 0-10: 10%; and
cosolvent: 25%; and
water for balance.

Mixing the components evenly in the container, keeping the container in water bath heating at 50-60 °C, and in the meantime performing an ultrasonic shock and stirring for 0.5h until the mixture got fully dissolved, to obtain the composite acidizing corrosion inhibitor compound.

Embodiment 3

(1) Preparation of indolizine derivative concentrated mother liquor (mass percentage, same below):

industrial quinoline: 20%;
industrial benzyl chloride: 25%; and
ethanol: 55%;
the industrial quinoline, the ethanol and the industrial benzyl chloride are added in turn to react in a container, after the reaction lasts for 6h under a condition of continuous stirring and constant temperature of 110 °C, to obtain the quaternary ammonium salt intermediate. After cooling, sodium nitrite solid with the same mass as the raw material of quinoline was added to the intermediate mixture, and the temperature is risen to 140 °C in the same container with stirring for 3h before the reaction ended. After the mixture is slightly cooled, the solid insoluble substance is filtered out with 100 to 200 mesh filter cloth and the filtrate is collected, heating until reaches the boiling point, 50% solvent from total mass of the filtrate was removed to obtain the indolizine derivative concentrated mother liquor.

(2) Preparation of compound synergistic additives:

organic synergist: paraformaldehyde 65%;
inorganic synergist: potassium iodide 26%; and
water for balance.
Mixing the organic synergist and inorganic synergist according to the proportion, and stirring evenly, and the compound synergistic additives can be obtained.

(3) Preparation of cosolvent:

formic acid: 50%;
ethanol: 50%;
the cosolvent is obtained after the organic acid is evenly mixed with the alcohol solvent.

(4) The formulation of composite acidizing corrosion inhibitor compound:
According to the mass percentage, the composite acidizing corrosion inhibitor compound includes the following components:

indolizine derivative concentrated mother liquor: 35%;
compound synergistic additives: 33%; and
surfactant Triton X-100: 8%; and
cosolvent: 22%; and
water for balance.

Mixing the components evenly in the container, keeping the container in water bath heating at 50-60 °C, and in the meantime performing an ultrasonic shock and stirring for 0.5h until the mixture got fully dissolved, to obtain the composite acidizing corrosion inhibitor compound.

Embodiment 4

(1) Preparation of indolizine derivative concentrated mother liquor (mass percentage, same below):

industrial quinoline: 20%;
industrial benzyl chloride: 25%; and
ethanol: 55%;
the industrial quinoline, the ethanol and the industrial benzyl chloride are added in turn to react in a container, after the reaction lasts for 6h under a condition of continuous stirring and constant temperature of 110 °C, to obtain the quaternary ammonium salt intermediate. After cooling, sodium nitrite solid with the same mass as the raw material of quinoline was added to the intermediate mixture, and the temperature is risen to 140 °C in the same container with stirring for 3h before the reaction ended. After the mixture is slightly cooled, the solid insoluble substance is filtered out with 100 to 200 mesh filter cloth and the filtrate is collected, heating until reaches the boiling point, 50% solvent from total mass of the filtrate was removed to obtain the indolizine derivative concentrated mother liquor.

(2) Preparation of compound synergistic additives:

organic synergist: paraformaldehyde 55%;
inorganic synergist: antimony trioxide 28%; and
water for balance.
Mixing the organic synergist and inorganic synergist according to the proportion, and stirring evenly, and the compound synergistic additives can be obtained.

(3) Preparation of cosolvent:

oxalic acid: 50%;
ethylene glycol: 50%;
the cosolvent is obtained after the organic acid is evenly mixed with the alcohol solvent.

(4) The formulation of composite acidizing corrosion inhibitor compound:
According to the mass percentage, the composite acidizing corrosion inhibitor compound includes the following components:

indolizine derivative concentrated mother liquor: 32%;
compound additive: 35%;
surfactant Span-60: 9%; and
cosolvent: 20%; and

water for balance.

Mixing the components evenly in the container, keeping the container in water bath heating at 50-60 °C, and in the meantime performing an ultrasonic shock and stirring for 0.5h until the mixture got fully dissolved, to obtain the composite acidizing corrosion inhibitor compound.

Embodiment 5

(1) Preparation of indolizine derivative concentrated mother liquor (mass percentage, same below):

industrial quinoline: 20%;
industrial benzyl chloride: 25%; and
ethanol: 55%;
the industrial quinoline, the ethanol and the industrial benzyl chloride are added in turn to react in a container, after the reaction lasts for 6h under a condition of continuous stirring and constant temperature of 110 °C, to obtain the quaternary ammonium salt intermediate. After cooling, sodium nitrite solid with the same mass as the raw material of quinoline was added to the intermediate mixture, and the temperature is risen to 140 °C in the same container with stirring for 3h before the reaction ended. After the mixture is slightly cooled, the solid insoluble substance is filtered out with 100 to 200 mesh filter cloth and the filtrate is collected, heating until reaches the boiling point, 50% solvent from total mass of the filtrate was removed to obtain the indolizine derivative concentrated mother liquor.

(2) Preparation of compound synergistic additives:

organic synergist: paraformaldehyde 45%;
inorganic synergist: cuprous iodide 20%; and
water for balance.
Mixing the organic synergist and inorganic synergist according to the proportion, and stirring evenly, and the compound synergistic additives can be obtained.

(3) Preparation of cosolvent:

acetic acid: 50%;
ethanol: 50%;
the cosolvent is obtained after the organic acid is evenly mixed with the alcohol solvent.

(4) The formulation of composite acidizing corrosion inhibitor compound:
According to the mass percentage, the composite acidizing corrosion inhibitor compound includes the following components:

indolizine derivative concentrated mother liquor: 25%;
compound synergistic additives: 38%; and
surfactant lignosulfonate: 12%; and
cosolvent: 23%; and
water for balance.

Mixing the components evenly in the container, keeping the container in water bath heating at 50-60 °C, and in the meantime performing an ultrasonic shock and stirring for 0.5h until the mixture got fully dissolved, to obtain the composite acidizing corrosion inhibitor compound.

The anti-corrosion effectiveness of composite acidizing corrosion inhibitor compound prepared in embodiments 1-5 was studied according to the corrosion inhibitor performance test weight loss method in "petroleum and natural gas industry standard SY/T5405-2019" of the People’s Republic of China. The specific experimental steps are as follows: (1) washing N80 steel specimens required by the corrosion test with water, ethanol, and acetone, air drying, numbering and weighing; (2) adding 20 wt% hydrochloric acid, or mud acid (12 wt% hydrochloric acid mixed with 3 wt% hydrofluoric acid) and the specified dosage of acidizing corrosion inhibitor in each container, the specimens with engraved numbers were immerged in the corrosive solution at specific temperature for 4 h to complete the evaluation process; (3) after the reaction

is completed, washing the specimens with water, ethanol and acetone in turn, and then weighing again after air drying; (4) calculating the corrosion rate according to the change in the quality of specimen before and after the weight loss experiment.

The gravimetric evaluation requirements of acidification corrosion inhibitor under different acidic medium and different evaluation temperatures in "SY/T5405-2019" are shown in Table 3.

Table 3 Industry standards for evaluation of corrosion inhibitors for acidification

| Acid type | Temperature (°C) | Pressure (Mpa) | Stirring speed (r/min) | Time (h) | Concentration of Acid (wt.%) | | Concentration of Corrosion inhibitor (wt.%) | Corrosion rate requirement in SY/T5405-2019 ($g \cdot m^{-2} \cdot h^{-1}$) |
|---|---|---|---|---|---|---|---|---|
| | | | | | HCl | HF | | |
| Hydrochloric acid | 100 | 16.0 | 60 | 4 | 20 | 0 | 1.5 | ≤10.00 |
| | 120 | | | | 20 | | 2.0 | ≤35.00 |
| | 140 | | | | 20 | | 3.0 | ≤45.00 |
| | 160 | | | | 20 | | 4.0 | ≤65.00 |
| | 180 | | | | 20 | | 5.0 | ≤80.00 |
| Mud acid | 100 | 16.0 | 60 | 4 | 12 | 3 | 1.5 | ≤6.00 |
| | 120 | | | | 12 | 3 | 2.0 | ≤15.00 |
| | 140 | | | | 12 | 3 | 4.0 | ≤30.00 |
| | 160 | | | | 12 | 3 | 5.0 | ≤45.00 |
| | 180 | | | | 12 | 3 | 6.0 | ≤75.00 |

The results of weight loss corrosion experiments at 120 °C when composite acidizing corrosion inhibitor compound prepared in embodiments 1-5 serves as corrosion inhibitor are shown in Table 4.

Table 4 Corrosion evaluation results at 120 °C

| Embodiment | Acid type | Temp. /°C | Time /h | Conc. of corrosion inhibitor /% | Corrosion rate /$g \cdot m^{-2} \cdot h^{-1}$ |
|---|---|---|---|---|---|
| 1 | 20% Hydrochloric acid | 120 | 4h | 1.0 | 27.9 |
| | Mud acid (12%HCl+3%HF) | | | 1.5 | 14.1 |
| 2 | 20% Hydrochloric acid | | | 1.5 | 26.3 |
| | Mud acid (12%HCl+3%HF) | | | 1.5 | 12.8 |
| 3 | 20% Hydrochloric acid | | | 1.0 | 31.9 |
| | Mud acid (12%HCl+3%HF) | | | 1.0 | 10.3 |
| 4 | 20% Hydrochloric acid | | | 1.5 | 26.5 |
| | Mud acid (12%HCl+3%HF) | | | 1.5 | 12.1 |
| 5 | 20% Hydrochloric acid | | | 1.5 | 30.2 |
| | Mud acid (12%HCl+3%HF) | | | 1.5 | 14.8 |

The results of weight loss corrosion experiments at 140 °C of the composite acidizing corrosion inhibitor compound prepared in embodiments 1-5 serves as corrosion inhibitor are shown in Table 5.

Table 5 Corrosion evaluation results at 140 °C

| Embodiment | Acid type | Temp. /°C | Time /h | Conc. of corrosion inhibitor /% | Corrosion rate /$g \cdot m^{-2} \cdot h^{-1}$ |
|---|---|---|---|---|---|
| 1 | 20% Hydrochloric acid | 140 | 4h | 3.0 | 32.9 |
| | Mud acid (12%HCl+3%HF) | | | 2.5 | 28.1 |
| 2 | 20% Hydrochloric acid | | | 3.0 | 33.8 |
| | Mud acid (12%HCl+3%HF) | | | 3.0 | 21.0 |
| 3 | 20% Hydrochloric acid | | | 2.5 | 36.6 |
| | Mud acid (12%HCl+3%HF) | | | 3.0 | 26.3 |
| 4 | 20% Hydrochloric acid | | | 3.0 | 34.4 |
| | Mud acid (12%HCl+3%HF) | | | 3.0 | 28.2 |
| 5 | 20% Hydrochloric acid | | | 3.0 | 36.5 |
| | Mud acid (12%HCl+3%HF) | | | 3.0 | 26.9 |

The results of weight loss corrosion experiments at 160 °C when composite acidizing corrosion inhibitor compound prepared in embodiments 1-5 serves as corrosion inhibitor are shown in Table 6.

Table 6 Corrosion evaluation results at 160 °C

| Embodiment | Acid type | Temp. /°C | Time /h | Conc. of corrosion inhibitor /% | Corrosion rate /$g \cdot m^{-2} \cdot h^{-1}$ |
|---|---|---|---|---|---|
| 1 | 20% Hydrochloric acid | 160 | 4h | 3.5 | 58.9 |
| | Mud acid (12%HCl+3%HF) | | | 4.0 | 39.1 |
| 2 | 20% Hydrochloric acid | | | 3.0 | 61.4 |
| | Mud acid (12%HCl+3%HF) | | | 4.0 | 41.0 |
| 3 | 20% Hydrochloric acid | | | 3.0 | 48.5 |
| | Mud acid (12%HCl+3%HF) | | | 4.5 | 37.3 |
| 4 | 20% Hydrochloric acid | | | 3.5 | 57.1 |
| | Mud acid (12%HCl+3%HF) | | | 4.0 | 29.2 |
| 5 | 20% Hydrochloric acid | | | 3.5 | 49.8 |
| | Mud acid (12%HCl+3%HF) | | | 3.5 | 36.9 |

As can be seen from Table 3 to Table 6, the content of the composite acidizing corrosion inhibitor compound prepared in embodiments 1-5 is lower than the requirements of the industry standard, and the inhibition performance of the composite acidizing corrosion inhibitor compound is better than the requirements of the industry standard under the same condition.

According to the corrosion inhibitor performance test method for acidification by weight loss method in SY/T5405-2019 (petroleum and natural gas industry standard of the People's Republic of China), the anti-corrosion effectiveness of the composite acidizing corrosion inhibitor compound prepared in embodiments 1-5 was evaluated in 20 wt.% hydrochloric acid at 120 °C with an amount of 1.0 wt.%. The photograph of the N80 steel specimen after gravimetric test by corrosion inhibitor in each embodiment are shown in FIG. 6, in which Group (a) is the blank control group without any corrosion inhibitor, and group (b)-(f) is the N80 specimen after weight loss test with corrosion inhibitors in embodiments 1 to 5, respectively. It can be seen that the corrosion inhibitor prepared according to the invention has positive effect of corrosion inhibition. Moreover, in the presence of inhibitor, the specimen shows a smoother morphology and a larger contact angle than that of the blank group, indicating that the corrosion inhibitor exhibit a hydrophobic function after been adsorbed onto the metal interface and can effectively block the direct contact between corrosive medium and metal materials.

The embodiments are based on the indolizine derivative below as an example.

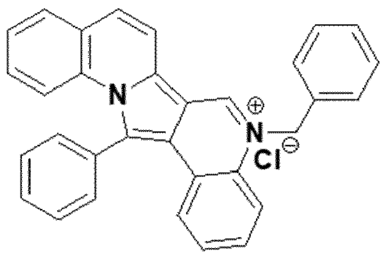

Also, a person having ordinary skill in the art can know that the indolizine derivative VI or indolizine derivative VII can achieve similar technical effects of embodiments 1-5.

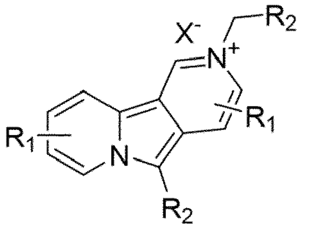

VI

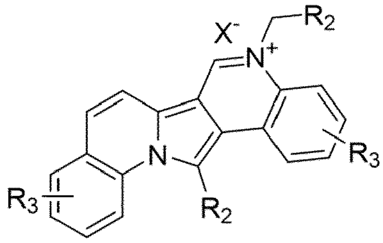

VII

Where $R_1$ and $R_3$ are selected from hydrogen atom, saturated alkyl chain with the number of carbon atoms within $C_1$-$C_{20}$, unsaturated alkyl chain with the number of carbon atoms within $C_1$-$C_{20}$, saturated cyclic alkyl group with the number of carbon atoms within $C_1$-$C_{20}$, unsaturated cyclic alkyl group with the number of carbon atoms within $C_1$-$C_{20}$, aldehyde group, halogen, nitro group, cyanide group, hydroxyl group, methoxy group or 4-N,N-dimethylamino group, $R_1$ is the same or different from $R_3$; $R_2$ is selected from the saturated chain alkyl, phenyl, benzoyl, naphthalene, halogenated phenyl, methyl formate, ethyl formate, methoxyphenyl, nitrophenyl, methyl phenyl within $C_1$-$C_{20}$; X selected from halogens.

The above embodiments are only the representative embodiments which given to fully illustrate the invention, however, the scope of protection of the invention is not limited to these embodiments. The equivalent substitution or transformation made by a technician in this field on the basis of the invention is also within the scope of protection of the invention. The scope of protection of the invention is subject to the claims

## Claims

1. a composite acidizing corrosion inhibitor compound based on an indolizine derivative, **characterized in that**, raw materials and mass fractions of the composite acidizing corrosion inhibitor compound are as following:

   indolizine derivative concentrated mother liquor 25%-35%;
   compound synergistic additives 30%-40%; and
   surfactant 8%-12%; and
   cosolvent 20%-25%; and
   water for balance;
   wherein the indolizine derivative concentrated mother liquor is obtained by steaming away part of solvent from indolizine derivative solution;
   wherein the indolizine derivative comprises indolizine derivative VI and indolizine derivative VII; and general formulas for chemical structure of the indolizine derivative VI and the indolizine derivative VII are shown below;

   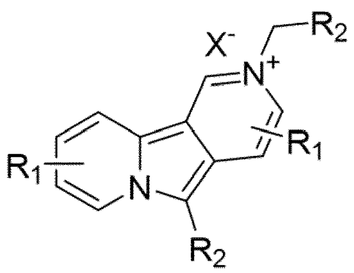
   VI

   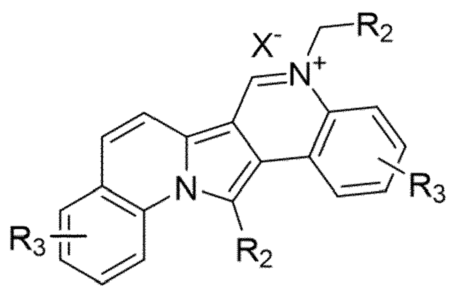
   VII

   wherein $R_1$ and $R_3$ are one or two of hydrogen atom, saturated alkyl chain with a number of carbon atoms within $C_1$ to $C_{20}$, unsaturated alkyl chain with a number of carbon atoms within $C_1$ to $C_{20}$, and saturated cyclic alkyl group with a number of carbon atoms within $C_1$ to $C_{20}$, and unsaturated cyclic alkyl group with a number of carbon atoms within $C_1$ to $C_{20}$, aldehyde group, and halogen, and nitro group, and cyano group, and hydroxyl group, and methoxy group and 4-N, N-dimethylamino group;
   wherein a group type of group $R_1$ is the same or different from that of $R_3$; wherein $R_2$ is one of saturated chain alkyl, phenyl, and benzoyl, and naphthalene, and halogenated phenyl, and methyl formate, and ethyl formate, and methoxyphenyl, and nitrophenyl, and methyl phenyl, and a number of carbon atoms of $R_2$ is within $C_1$ to $C_{20}$;
   wherein X is halogen;
   wherein the compound synergistic additives comprise organic synergist and inorganic synergist; wherein the organic synergist is paraformaldehyde; wherein the inorganic synergist comprises one or more of potassium iodide, cuprous iodide or antimony trioxide.

2. The composite acidizing corrosion inhibitor compound based on the indolizine derivative according to claim 1, **characterized in that**, the indolizine derivative concentrated mother liquor is prepared by the following steps:

   (1) heating pyridine derivative I or quinoline derivative II with halogenated compounds III containing $\alpha$-methyl in solvent to generate intermediate mixture containing quaternary ammonium salt IV or quaternary ammonium salt V; and general formulas for chemical structure of pyridine derivative I, quinoline derivative II, and halogenated

compounds III, and quaternary ammonium salt intermediate IV and quaternary ammonium salt intermediate V are shown below;
(2) adding an oxidant, nitrite, into the intermediate mixture obtained in step (1), heating the intermediate mixture to obtain a mixture containing indolizine derivative VI or indolizine derivative VI through a dimerization reaction;
(3) filtering the mixture obtained by in step (2) to obtain filtrate, and distilling to remove 40 % to 60 % solvent from a total mass of the filtrate, to obtain the indolizine derivative concentrated mother liquor.

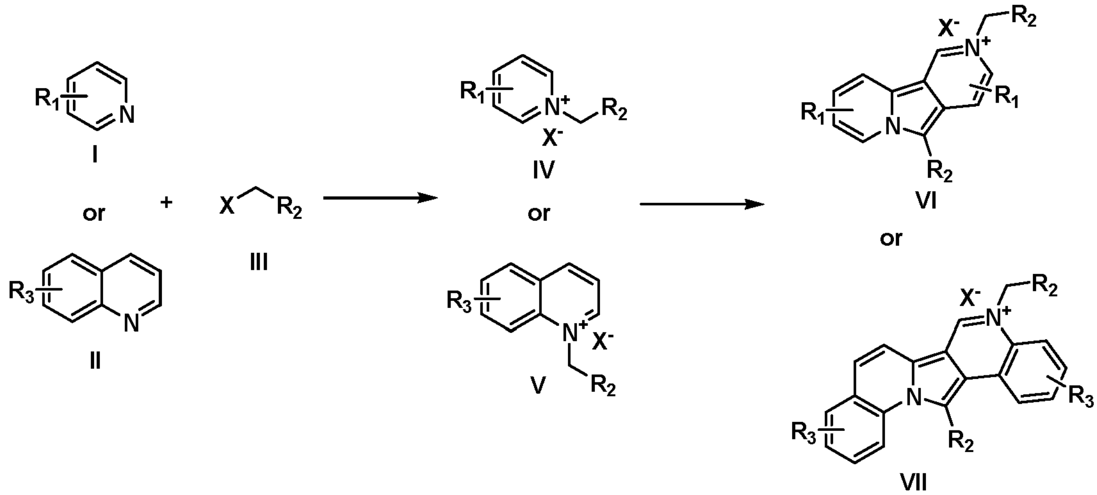
I or II + III → IV or V → VI or VII

3. The composite acidizing corrosion inhibitor compound based on the indolizine derivative according to claim 2, **characterized in that**, in step (1),
a proportion in mass among the pyridine derivative I or quinoline derivative II, the halogenated compound III containing $\alpha$-methyl and the solvent is (0.9-1.0):(1.1-1.2):(2.5-3.0).

4. The composite acidizing corrosion inhibitor compound based on the indolizine derivative according to claim 1, **characterized in that**, the solvent used in the preparation process of the indolizine derivative concentrated mother liquor is dimethyl sulfoxide, N,N-dimethylformamide, acetonitrile, 1,2-dichloroethane, ethanol, n-butanol, 2-butanol, methanol, n-propanol or isopropanol.

5. The composite acidizing corrosion inhibitor compound based on the indolizine derivative according to claims 1-4, **characterized in that**, a chemical structure formula of the indolizine derivative VII is:

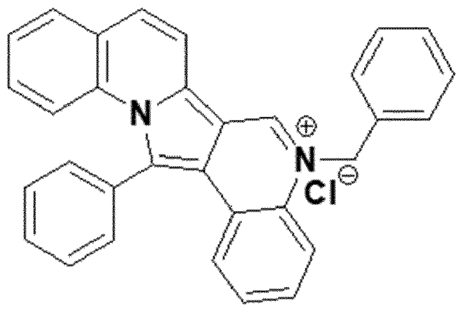

6. The composite acidizing corrosion inhibitor compound based on the indolizine derivative according to claim 1, **characterized in that**,: a proportion in mass between the organic synergist and inorganic synergists of compound synergistic additives is (1.9-2.2):(0.8-1.1).

7. The composite acidizing corrosion inhibitor compound based on the indolizine derivative according to claim 1, **characterized in that**, one or more kind(s) of Triton X-100, Peregal 0-10, Span-60, Tween 60 and lignosulfonate is (are) chosen as surfactant(s).

8. The composite acidizing corrosion inhibitor compound based on the indolizine derivative according to claim 1, **characterized in that**, the cosolvent comprises organic acid and fatty alcohol.

9. The composite acidizing corrosion inhibitor compound based on the indolizine derivative according to claim 1, **characterized in that**, one or more kind(s) of formic acid, acetic acid and oxalic acid is (are) chosen as organic acid(s); one or more kind(s) of methanol, ethanol, n-propyl alcohol, isopropyl alcohol and glycol is (are) chosen as fatty alcohol(s).

10. A preparation method of the composite acidizing corrosion inhibitor compound based on the indolizine derivative of claims 1-9, **characterized in that**, comprising the following steps:

synthesizing the indolizine derivative VI or indolizine derivative VII, and steaming away part of solvent to obtain indolizine derivative concentrated mother liquor;
mixing the organic synergist and inorganic synergist evenly in water to obtain compound synergistic additives;
mixing organic acid and fatty alcohol evenly to get cosolvent;
mixing the indolizine derivative concentrated mother liquor, compound synergistic additives, surfactants, cosolvent and water evenly in a container, heating the container by water bath at 50°C to 60°C, and at the meantime stirring the mixture under ultrasonic shock until the mixture got fully dissolved, to obtain the composite acidizing corrosion inhibitor compound.

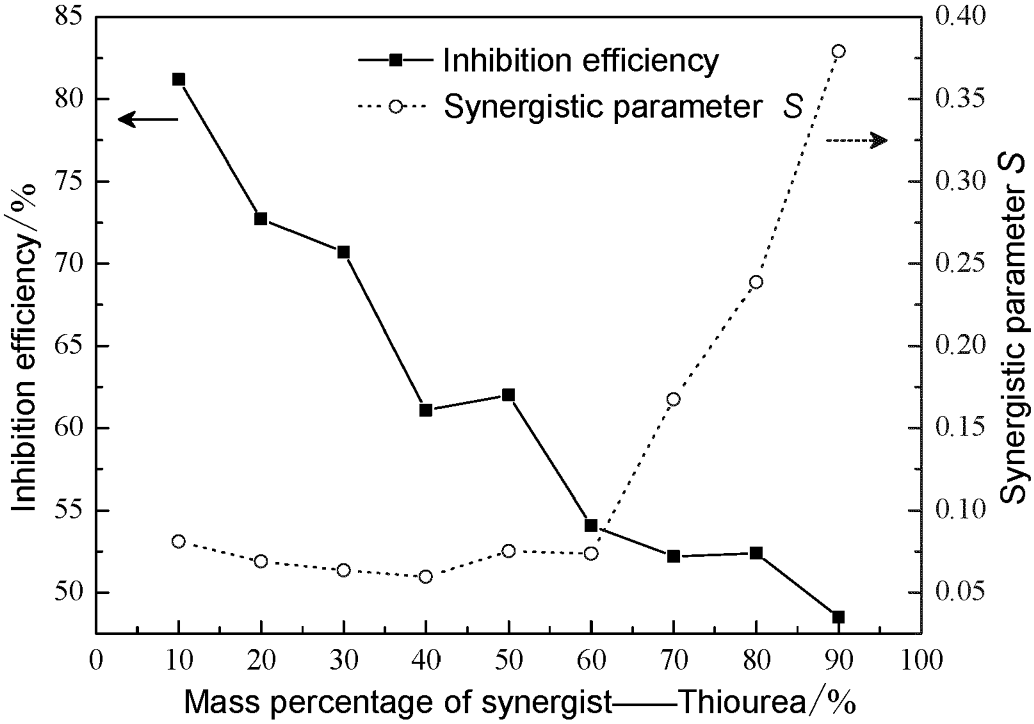
Inhibition efficiency
Synergistic parameter S
Inhibition efficiency/%
Synergistic parameter S
Mass percentage of synergist——Thiourea/%
85
80
75
70
65
60
55
50
0.40
0.35
0.30
0.25
0.20
0.15
0.10
0.05
0
10
20
30
40
50
60
70
80
90
100

FIG. 1

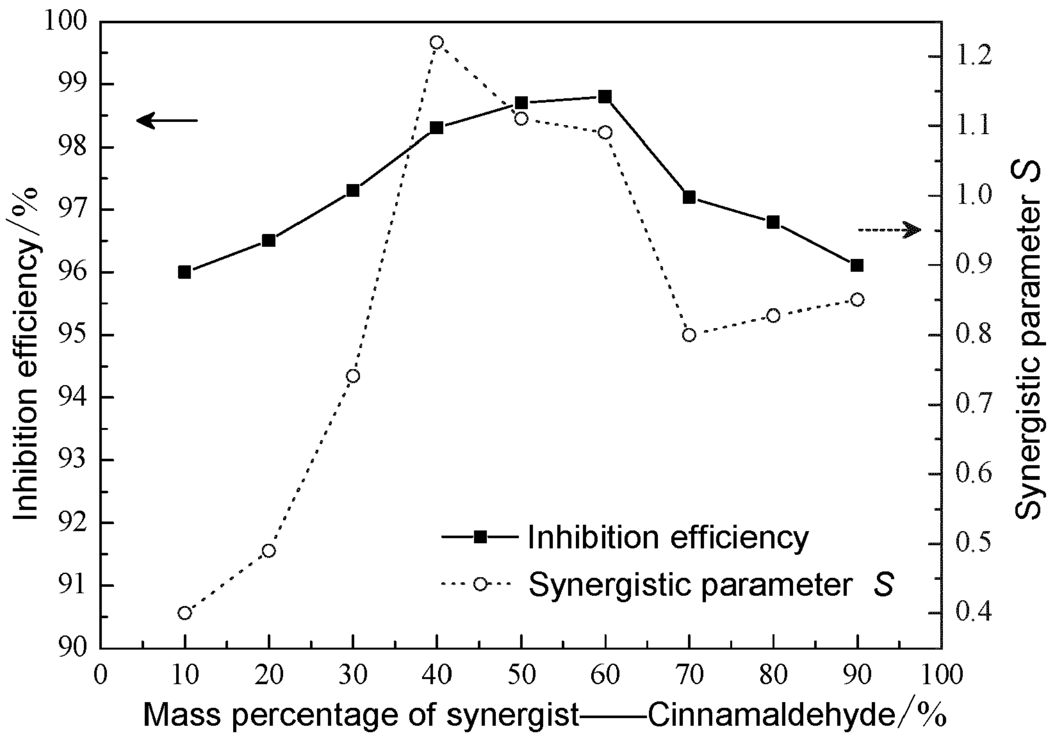
Inhibition efficiency
Synergistic parameter S
Inhibition efficiency/%
Synergistic parameter S
Mass percentage of synergist——Cinnamaldehyde/%
100
99
98
97
96
95
94
93
92
91
90
1.2
1.1
1.0
0.9
0.8
0.7
0.6
0.5
0.4
0
10
20
30
40
50
60
70
80
90
100

FIG. 2

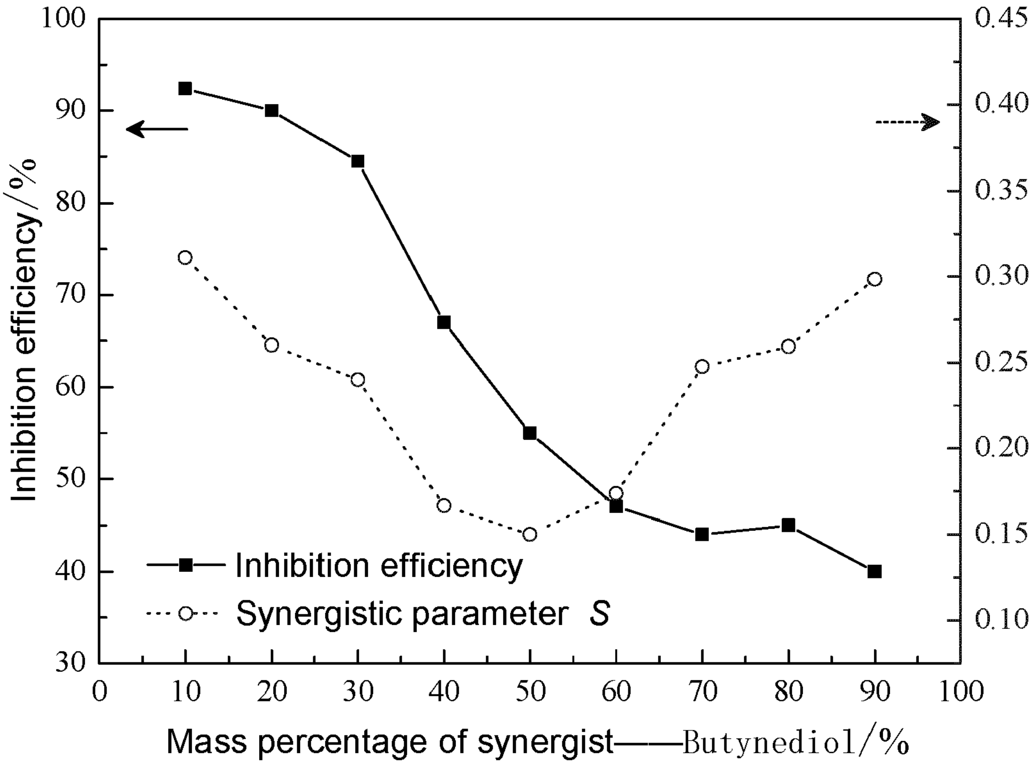
Inhibition efficiency/%
Synergistic parameter S
Inhibition efficiency
Synergistic parameter S
Mass percentage of synergist——Butynediol/%
100
90
80
70
60
50
40
30
0.45
0.40
0.35
0.30
0.25
0.20
0.15
0.10
0
10
20
30
40
50
60
70
80
90
100

FIG. 3

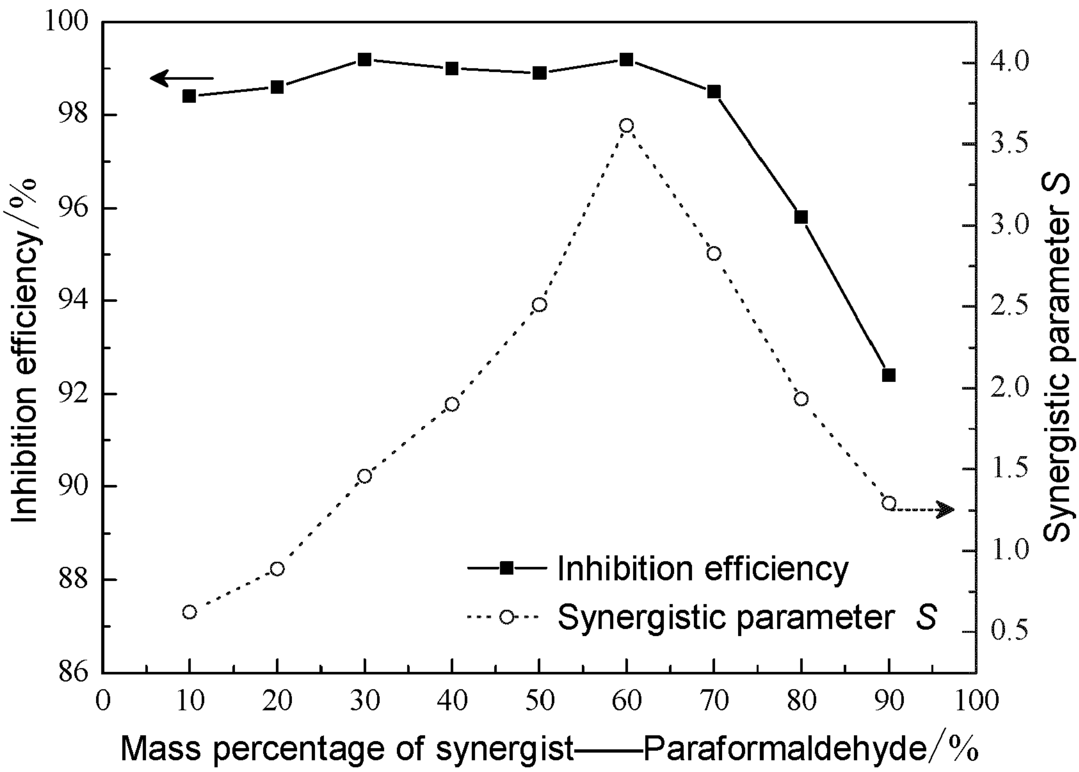
Inhibition efficiency/%
Synergistic parameter S
Inhibition efficiency
Synergistic parameter S
Mass percentage of synergist——Paraformaldehyde/%
100
98
96
94
92
90
88
86
4.0
3.5
3.0
2.5
2.0
1.5
1.0
0.5
0
10
20
30
40
50
60
70
80
90
100

FIG. 4

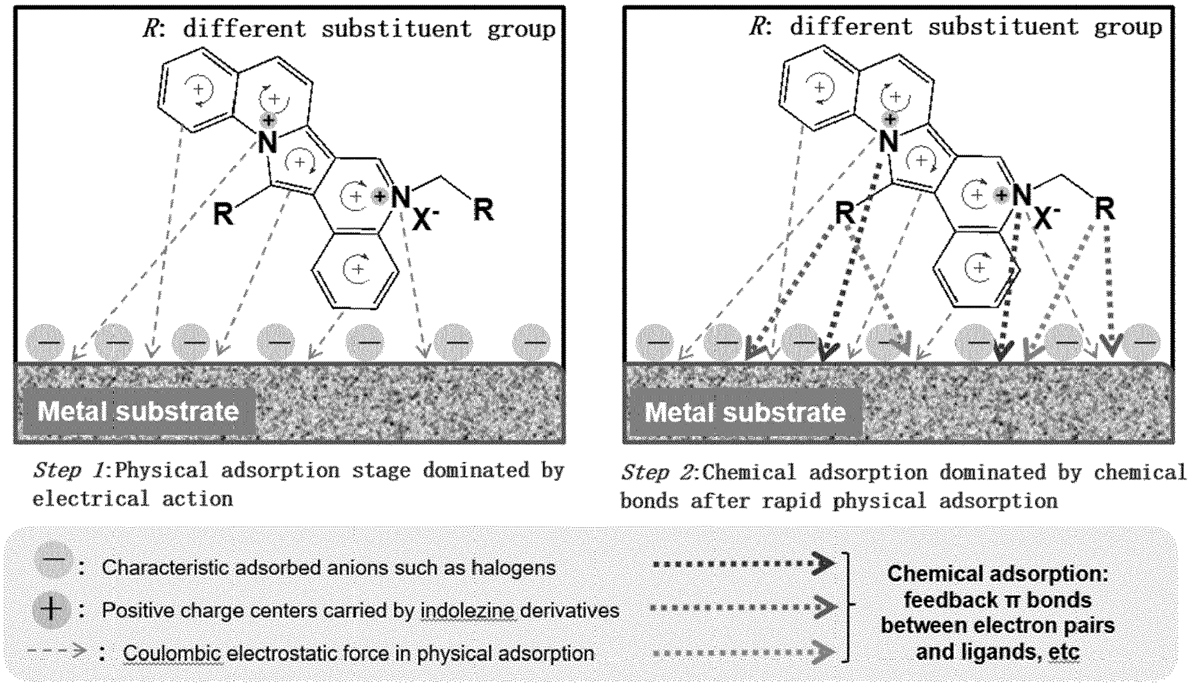
R: different substituent group
R: different substituent group
Metal substrate
Metal substrate
Step 1:Physical adsorption stage dominated by electrical action
Step 2:Chemical adsorption dominated by chemical bonds after rapid physical adsorption
: Characteristic adsorbed anions such as halogens
: Positive charge centers carried by indolezine derivatives
: Coulombic electrostatic force in physical adsorption
Chemical adsorption: feedback π bonds between electron pairs and ligands, etc

FIG. 5

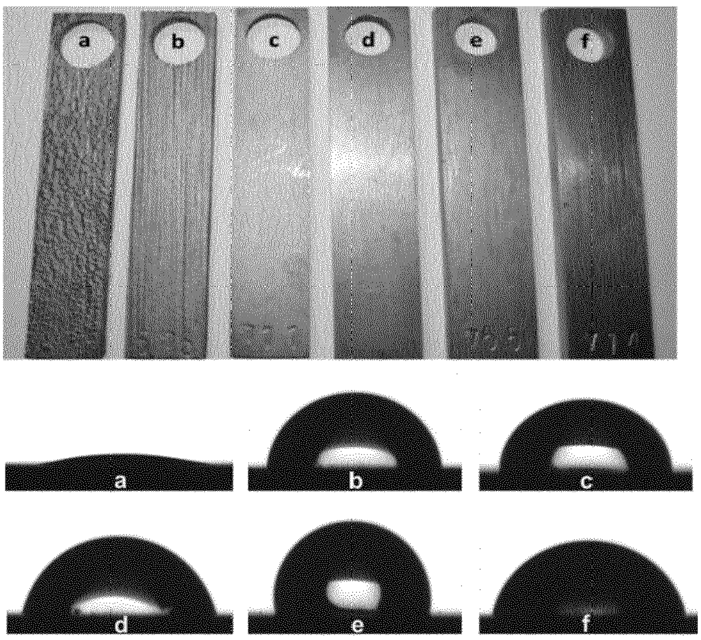
a
b
c
d
e
f

FIG. 6

Europäisches Patentamt
European Patent Office
Office européen des brevets

# EUROPEAN SEARCH REPORT

Application Number
EP 24 18 3750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 114 105 984 A (CHINA PETROLEUM UNIV EAST CHINA; HUAIYIN TEACHING UNIV) 1 March 2022 (2022-03-01) * claims * * paragraph [0002] * ----- | 1-10 | INV. C09K8/035 C09K8/54 |
| Y | CN 116 478 678 A (CHENGDU SHUNDALI POLYMER CO LTD; SICHUAN YINYU CHEMICAL TECH CO LTD) 25 July 2023 (2023-07-25) * claims * * examples * ----- | 1-10 | |
| A | CN 113 802 124 A (UNIV LIAONING SHIHUA) 17 December 2021 (2021-12-17) * claims * * examples * ----- | 1-10 | |
| | | | TECHNICAL FIELDS SEARCHED (IPC) |
| | | | C09K |

The present search report has been drawn up for all claims

| Place of search | Date of completion of the search | Examiner |
|---|---|---|
| Munich | 20 November 2024 | Zimpfer, Emmanuel |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 18 3750

This annex lists the patent family members relating to the patent documents cited in the above-mentioned European search report. The members are as contained in the European Patent Office EDP file on
The European Patent Office is in no way liable for these particulars which are merely given for the purpose of information.

20-11-2024

| Patent document cited in search report | Publication date | Patent family member(s) | Publication date |
|---|---|---|---|
| CN 114105984 A | 01-03-2022 | NONE | |
| CN 116478678 A | 25-07-2023 | NONE | |
| CN 113802124 A | 17-12-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 107502333 A
- CN 107418549 A
- CN 103554027 A
- CN 1042333310 A
- CN 110105288 A
- CN 114105984 B
- CN 202211470666

### Non-patent literature cited in the description

- *Corros. Sci.*, 2015, vol. 99, 281-294
- *Ind. Eng. Chem. Res.*, 2014, vol. 53, 14199-14207
- *J. Mol. Liq.*, 2021, vol. 347, 117957
- *Chem. Eng. J.*, 2020, vol. 402, 126219
- *Corros. Sci*, 2015, vol. 90, 118-132
- *Corros. Sci.*, 2012, vol. 65, 13-25
- *Corros. Sci.*, 2015, vol. 94, 224-236